# EUROPEAN PATENT APPLICATION

(11) **EP 3 696 427 A1**
(43) Date of publication of application: **19.08.2020**
(21) Application number: 20382022.0
(22) Date of filing: 15.01.2020
(51) Int. Cl.: F16B 13/08

(54) **CLAMPING BOLT WITH EXPANDABLE ANCHORING HEAD**

(30) Priority: 31.01.2019 ES 201930159 U
(71) Applicant: Ramíret Ponce, Juan Carlos, 07820 San Antonio (Eivissa) (ES); de Souza, Maria Dos Remedios, 07820 San Antonio (Eivissa) (ES)
(72) Inventor: Ramíret Ponce, Juan Carlos, 07820 San Antonio (Eivissa) (ES); de Souza, Maria Dos Remedios, 07820 San Antonio (Eivissa) (ES)
(74) Representative: Díaz de Bustamante y Terminel, Isidro

(57) **Abstract**

Fastening bolt with expandable anchoring head which, formed from a threaded rod with an expandable head (2), designed to allow the fastening thereof inserted into an orifice (3) made on a surface (4), is characterized in that said expandable head (2) is formed by a circular body (20) that threads on the bolt (1) and has two or more claws (21) radially attached thereto by means of a ring (22) in which they are articulated, between a closed position, in which they are located parallel to the bolt (1) and an open or expanded position, in which they remain perpendicular, with springs (23) being interposed in said articulated fastening, that tend to keep them in an expanded position; and also in that, it comprises the existence of a retaining plug (5) formed by a hollow cylindrical body in which the bolt (1) and the head (2) are inserted and whose inner shape (50) conforms to that of the bolt (1) and the head (2) located at its end in the closed position, so that, while not moving outside said plug (5), it keeps the claws (21) in the closed position.

## Description

### OBJECT OF THE INVENTION

The invention, as exposed on the wording of the present specification, refers to a fastening bolt with an expandable anchoring head which imparts to the function it is intended to, advantages and characteristics, which will be described in detail below, which are an improvement of the current state of the art.

More specifically, the object of the invention is focused on a fastening bolt that has an expandable head designed to allow the fastening of the bolt on any surface subsequently hollow or difficult to access, either wall or ceiling, which has an improved structural configuration compared to what is currently known in the market that provides greater security in the fastening of the bolt and, consequently, the element that is attached thereto.

### APPLICATION FIELD OF THE INVENTION

The application field of the present invention is framed within the sector of the industry dedicated to the manufacture of mechanical fastening systems, focusing particularly on the field of expandable anchors.

### BACKGROUND OF THE INVENTION

As reference to the current state of the art, it should be noted that, although there are different anchoring solutions in the market for the fastening of bolts of the concerned herein, the existence of any is unknown, at least on the part of the applicant, nor any another invention of similar application, which presents technical, structural and constitutive characteristics that are the same or similar to those presented by the bolt claimed herein.

### EXPLANATION OF THE INVENTION

The fastening bolt with an expandable anchoring head proposed by the invention constitutes an alternative solution to what is already known in the market in its field of application, being the characterizing details that distinguish it conveniently included in the final claims that accompany the present description.

More specifically, what the invention proposes, as pointed out above, is a fastening bolt of the ones provided with an expandable head designed to allow the fastening of the bolt inserted in an orifice made in a surface that is subsequently hollow or difficult to access, for example a wall or a roof, to support in turn some other element, being distinguished by the fact that the aforementioned expandable head that this bolt is provided with, presents an innovative and improved structural configuration, compared to what is currently known in the market, which provides greater security in the fastening of the bolt and, consequently, the element that is attached thereto.

For this, and more specifically, said head, formed by a circular body that threatens into the bolt, has two or more claws that are radially attached to said body by a circular ring and linked to springs that tend to keep them in an expanded position. And, in parallel, the bolt and the head are inserted in a cylindrical plug whose inner shape conforms to that of the bolt and the head located at its end, so that, while the bolt is not screwed and the head is not moved out of said cleat, keeps the claws in closed position.

It should also be noted that the aforesaid plug, which may be metallic, made of plastic material or the like, and whose outer cylindrical surface will conform to the diameter of the perforation to which it is intended, has at its front end a perimetral moulding which protrudes as a retaining washer to prevent, during the insertion, the assembly from getting into the orifice.

Finally, it is important to note that, preferably, to prevent the plug from moving once inserted and for the claws of the head to be opened once expanded, the bolt incorporates a washer that holds said plug by its front part.

With all this, the mode of use of the fastening bolt will be as follows:
First, it will be convenient to choose the assembly of bolt, head and plug according to the depth of the orifice or thickness of the surface to which it is intended to be made so that it fits its size, for which it will be necessary to measure the depth of the orifice and so use the proper bolt.

Once the bolt has been chosen, the assembly is introduced into the orifice by pressing until the front moulding of the plug is set on the surface.

Then the retaining washer of the plug is rotated, to make it move towards the external moulding of the plug and a soft blow is given with a hammer on the front end of the bolt, according to the size and dimensions.

This hammer blow will push the head causing the claws to expand and remain open at the rear part of the surface covering a wider area than the diameter of the orifice.

Once the claws are open, the bolt is tightened, and the assembly is fastened securely.

### DESCRIPTION OF THE DRAWINGS

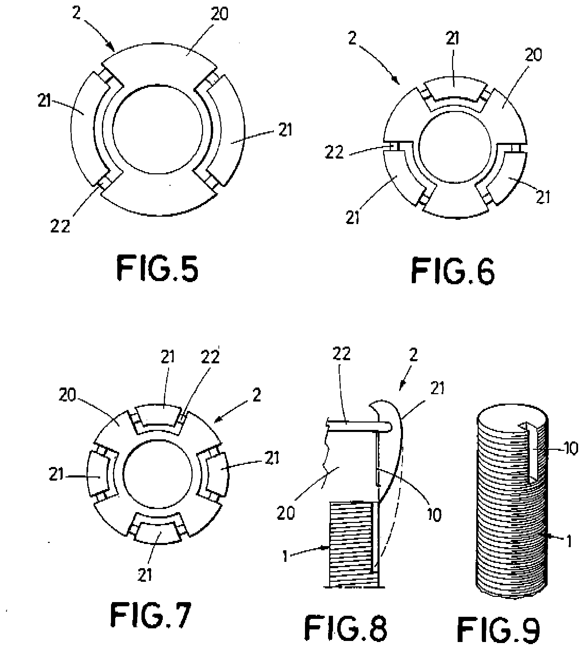

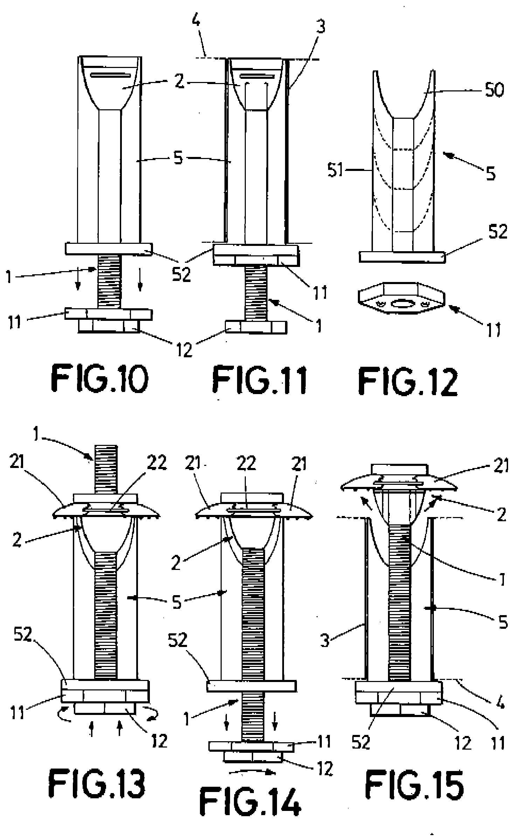

In order to complete the description being made and to ease a better understanding of the characteristics of the invention, we attach to the present specification, making part of the same, a set of layouts where, with an illustrative non limitative character, the following has been represented:
Figure number 1.- Shows a side elevation view of an exemplary embodiment of the expandable anchoring head the fastening bolt is provided with, object of the invention.
Figure number 2.- Shows a perspective view of one of the claws the head of the fastening bolt is provided with, according to the invention, being appreciated in addition to its structural configuration, the spring tending to expand it towards its open position.
Figure number 3.- Shows a side elevation view of the head incorporated in the bolt, in this case represented with the claws extended.
Figure number 4.- Shows a sectional elevational view of the head and bolt, shown in closed position and inserted inside the retaining plug provided to keep the claws in closed position during the placement.
Figures number 5, 6 and 7.- Show respective plan views of the bolt head of the invention, in three different examples of embodiment with two, three and four claws respectively.
Figure number 8.- Shows an elevation view of a portion of the head and the bolt, in an embodiment with insertion of the tip of the claws into a notch in the bolt.
Figure number 9.- Shows a perspective view of the notched bolt shown in figure 8.
Figure number 10.- Shows an elevation view of the complete assembly, that is, head, bolt and plug, ready for use.
Figure number 11.- Shows a sectioned elevation view of the assembly shown in figure 10, in this case represented once inserted in the orifice of the surface to which it is intended, in a first phase of placement.
Figure number 12.- Shows a sectional elevation view of the retaining plug, represented individually, without bolt or head, and next to the fastening washer thereof, represented in perspective.
Figures number 13 and 14.- Show different views in sectioned elevation of the head, bolt and plug assembly in respective operating phases.
Figure number 15.- Shows a sectioned elevation view of the assembly inserted in the orifice of the surface to which it is intended, represented in the placement phase, specifically the phase in which by threading bolt the head is moved outside the retaining plug, penetrating into the interior of the space behind the surface that it passes through, expanding the claws thereof.
Figure number 16.- Shows an elevation view of a different example of the bolt, head and retaining stop assembly, in this case without the bolt passing through the head, applicable for surfaces with less rear space.

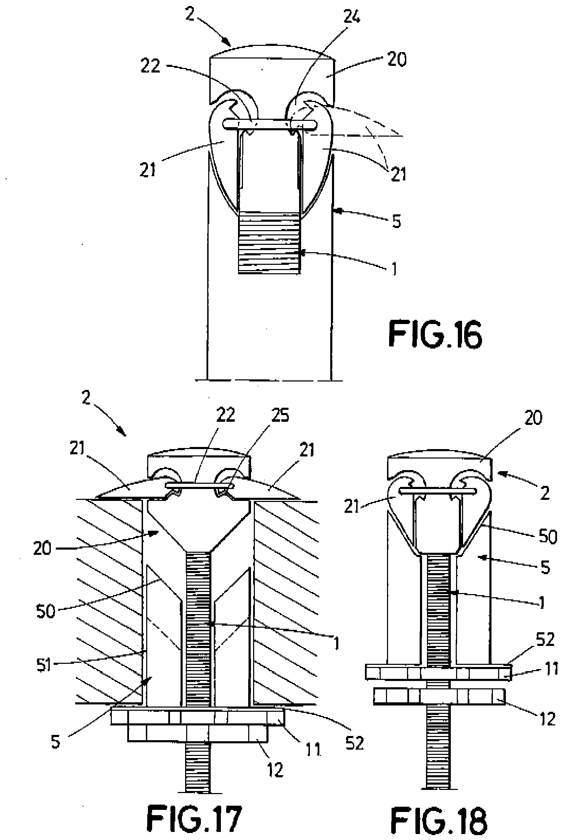

And Figures 17 and 18.- Show respective elevational views of the example of the assembly shown in Figure 16, with blind hollow head, represented, respectively, in the open position within the wall hole and in the closed position.

### PREFERRED EMBODIMENT OF THE INVENTION

In light of the mentioned figures, and according to the numbering taken on them, can be seen in them an example of non-limiting realization of the fastening bolt with expandable anchoring head of the invention which comprises the parts and elements indicated and described in detail below.

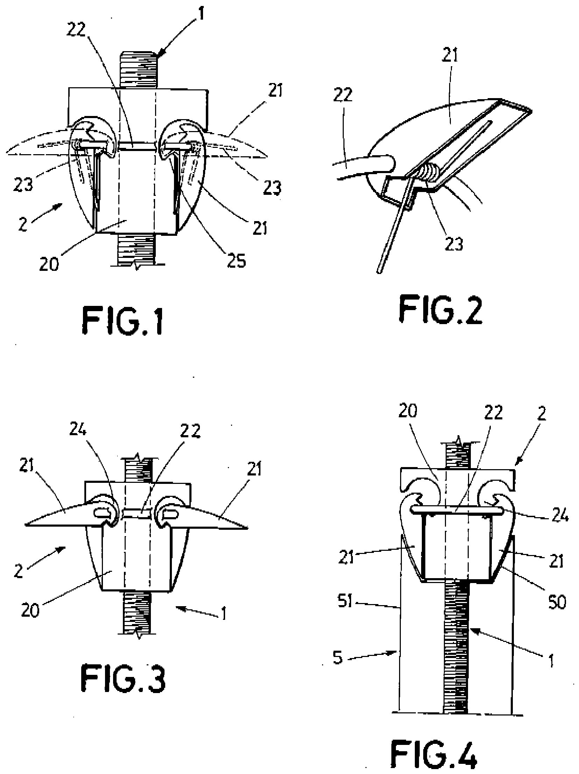

Thus, as shown in said figures, the bolt (1) in question, being formed, in a known manner, from a threaded rod with an expandable head (2) designed to allow the fastening thereof inserted in an orifice (3) made on a surface (4), has the particularity that said expandable head (2) is formed by a circular body (20) that threads on the bolt (1) and has two or more claws (21) attached radially thereto by means of a ring (22) in which they are articulated, between a closed position, in which they are located parallel to the bolt (1) (figures 1 and 4), and an open or expanded position, in which they are perpendicular to the bolt (figure 3), with springs (23) being interposed in said articulated fastening, that tend to keep them in an expanded position, there also being a retaining plug (5) formed by a hollow cylindrical body in which the bolt (1) and the head (2) are inserted and whose inner shape (50) conforms to that of the bolt (1) and the head (2) located at its end in the closed position, so that, while not moving outside said plug (5), it keeps the claws (21) in closed position.

Optionally, to ensure that in the closed position of the claws (21) the assembly of the head (2) has the smallest possible diameter, it has been provided the existence of notches (10) in the rear end of the bolt (1) suitable for the insertion therein of the tip of the claws (21) or of the spring (23) in their closed position, also causing the fastening thereof to avoid undesired displacement of the head (2) with respect to the bolt (1).

Furthermore, preferably, the circular body (20) of the head has, in its upper part, a recess (24) in which the ring (22) and the proximal part of the claws (21), which is rounded, fit to favour the rotation thereof when opened.

Optionally in said recess (24) and the proximal part of the claws (21), where they are inserted in the ring (22), have a complementary tongue-and-groove configuration, indicated in figure 1 and 17 with reference (25), that fit together when the claws (21) are placed in the open position to ensure their immobility in such a position.

In any case, preferably, the retaining plug (5), which can be metallic, of plastic material or some other similar material, and whose outer cylindrical surface (51) has a diameter that fits the diameter of the orifice (3) to which it is intended, has at its front end a perimetric moulding (52) protruding from said orifice (3) acting as a stop to prevent, during the insertion, the assembly from getting into the orifice (3).

Preferably, in addition, and to prevent the retaining plug (5) from moving once inserted and for the claws (21) of the head (2) to be opened by the rear part of the orifice (3) once expanded, the bolt incorporates a retaining washer (11) that holds said plug (5) by its front part by fitting on the moulding (52) thereof.

Optionally, the plug (5), as seen in figure 12, can be a piece segmented into several parts that can easily be separated, in order to reduce the size if there is a need to use it in a hole that has not been measured and the size thereof mut be reduced to adapt its size to the wall hole.

It should be noted that, as seen in figures 16 and 17, the head (2) has a circular body (20) shaped so that its threaded hole is through and therefore can be completely crossed by the bolt (1) (figure 1), or in such a way that said threaded hole is blind and therefore cannot be traversed and only conforms to the end of the bolt (1) (figures 16, 17 and 18), depending on the space available in the rear of the surface (4) in which it is installed.

As seen in figure 18, once the claws (21) are opened, on its return the lower part of the head (2) can conform to the size of the hole so that when the assembly is screwed it will be held as a plug and preventing the bolt from moving.

Finally, it should be mentioned that the front end of the bolt (1) may be provided with an ending (12) of variable configuration, depending on the needs of each case and can be, for example, a flat ending of hexagonal shape as a screw head, as the example shown in the figures, normally to fasten some element by screwing, but also in the form of hook or ring to hang elements thereon.

Having sufficiently described the nature of the present invention, as well as a way of putting it into practice, it is not considered necessary to make a more extensive explanation in order that any expert in this area will understand its scope and the advantages that can be derived from it, making known that, within reason it could be put into practice in other embodiments differing in detail from that indicated by way of example, and which will obtain the same degree of protection, provided that they do not alter, change, or modify its fundamental principle.

## Claims

1. FASTENING BOLT WITH EXPANDABLE ANCHORING HEAD which, formed from a threaded rod with an expandable head (2), designed to allow the fastening thereof inserted into an orifice (3) made on a surface (4), is **characterized in that** said expandable head (2) is formed by a circular body (20) that threads on the bolt (1) and has two or more claws (21) radially attached thereto by means of a ring (22) in which they are articulated, between a closed position, in which they are located parallel to the bolt (1) and an open or expanded position, in which they remain perpendicular, with springs (23) being interposed in said articulated fastening, that tend to keep them in an expanded position; and also **in that**, it comprises the existence of a retaining plug (5) formed by a hollow cylindrical body in which the bolt (1) and the head (2) are inserted and whose inner shape (50) conforms to that of the bolt (1) and the head (2) located at its end in the closed position, so that, while not moving outside said plug (5), it keeps the claws (21) in the closed position.

2. FASTENING BOLT WITH EXPANDABLE ANCHORING HEAD, according to claim 1, **wherein** there is provided the existence of notches (10) in the rear end of the bolt (1) suitable for the insertion in them of the tip of the claws (21) or of the spring (23) in its closed position.

3. FASTENING BOLT WITH EXPANDABLE ANCHORING HEAD, according to claim 1 or 2, **wherein** the retaining plug (5), whose outer cylindrical surface (51) has a diameter that conforms to the diameter of the orifice (3) to which it is intended, it has at its front end a perimetric moulding (52) protruding from said orifice (3) acting as a stop to prevent, during the insertion, the assembly from getting into the orifice (3).

4. FASTENING BOLT WITH EXPANDABLE ANCHORING HEAD, according to claim 3, **wherein** the bolt (1) incorporates a retaining washer (11) that holds the plug (5) by its front part by fitting on the moulding (52) thereof.

5. FASTENING BOLT WITH EXPANDABLE ANCHORING HEAD, according to any of claims 1 to 4, **wherein** the circular body (20) of the head has a recess (24) in which the ring (22) and the proximal part of the claws (21), which is rounded, fit to favour the rotation thereof when opened.

6. FASTENING BOLT WITH EXPANDABLE ANCHORING HEAD, according to claim 5, **wherein** the recess (24) and the proximal part of the claws (21) have a complementary tongue-and-groove configuration (25) that fit together when the claws (21) are located in the open position.

7. FASTENING BOLT WITH EXPANDABLE ANCHORING HEAD, according to any of claims 1 to 6, **wherein** the circular body (20) of the head (2) has a threaded through hole capable of being completely crossed by the bolt (1).

8. FASTENING BOLT WITH EXPANDABLE ANCHORING HEAD, according to any of claims 1 to 6, **wherein** the circular body (20) of the head (2) has a blind threaded hole that conforms to the end of the bolt (1).

9. FASTENING BOLT WITH EXPANDABLE ANCHORING HEAD, according to any of claims 1 to 8, **wherein** the body of the plug (5) is a piece segmented into several parts capable of being easily separated.
